# EUROPÄISCHE PATENTSCHRIFT

(11) **EP 0 535 190 B1**
(45) Veröffentlichungstag und Bekanntmachung des Hinweises auf die Patenterteilung: **27.09.1995**
(21) Anmeldenummer: 92907766.7
(22) Anmeldetag: 07.04.1992
(51) Int. Cl.: F16B 39/34, A61C 8/00

(54) **MIT AUSSENSCHRAUBGEWINDE VERSEHENER KÖRPER**
UNITS PROVIDED WITH AN EXTERNAL THREAD
CORPS COMPORTANT UN FILET EXTERIEUR

(30) Priorität: 20.04.1991 DE 4113411
(43) Veröffentlichungstag der Anmeldung: 07.04.1993
(73) Patentinhaber: EBERLE MEDIZINTECHNISCHE ELEMENTE GMBH, D-75449 Wurmberg (DE); IMZ-Fertigungs- und Vertriebsgesellschaft für dentale Technologie mbH, 70794 Filderstadt (DE)
(72) Erfinder: DÜRR, Walter, D-7537 Remchingen (DE); KIRSCH, Axel, D-7024 Filderstadt (DE)
(74) Vertreter: Goddar, Heinz J., Dr.
(86) Internationale Anmeldenummer: DE9200292
(87) Internationale Veröffentlichungsnummer: WO9218780

(56) Entgegenhaltungen:
- GB-A- 770 696
- US-A- 2 568 640
- US-A- 2 852 056
- US-A- 3 182 702
- US-A- 3 319 689
- US-A- 3 439 575

## Beschreibung

Die Erfindung betrifft einen mit Außenschraubgewinde versehenen Körper, mit mindestens einem zumindest im Endabschnitt des Schraubgewindes diesen zumindest teilweise überdeckenden und/oder diesen zumindest teilweise ersetzenden Kunststoff.

Bei Schraubverbindungen besteht je nach Einsatzzweck ein mehr oder minder starkes Bedürfnis, Lockerungen über eine Verdrehsicherung zu verhindern. So ist es bspw. im Bereich der Zahnprothetik unabdingbar, daß notwendige Schraubverbindungen einen lösbaren, aber festen Sitz haben. Lockerungen müssen insbesondere bei Teilen verhindert werden, die direkt in ein Implantat eingeschraubt werden, wie bspw. Implantatextensionen, Implantatpfosten, Pfosten für Attachments usw., oder bei Schrauben, die zur Befestigung von Kronen, Stegen und anderen Aufbauten in der Zahnprothetik dienen.

US-A-,319,689 offenbart eine Verdrehsicherung für Schraubenmuttern, bei der ein Sicherungselement um seine Funktion ausüben zu können, deformiert werden muß.

Auch in der US-A-2,568,640 ist eine Verdrehsicherung für Schraubenmuttern offenbart. Das Prinzip kann darüber hinaus auch zum Sichern einer Schraube in einer Ausnehmung mit einem Innengewinde verwendet werden. Die Schraube muß jedoch mit einer V-förmigen Ausnehmung an ihrer Spitze versehen werden, in die ein entsprechend geformtes Kunststoffteil eingesetzt werden muß, um eine Verdrehsicherung zu erzielen.

Ein mit einem Außenschraubgewinde versehener Körper der obengenannten Art ist z.B. aus der US-A-2,852,056 bekannt. Die darin beschriebene Schraube muß jedoch speziell mit besonders ausgeformten seitlichen Ausnehmungen versehen werden, in die das entsprechende Kunststoffteil eingreifen kann. Zudem ist das Einsetzen des Kunststoffteils in derartige seitliche Ausnehmungen schwierig.

Der Erfindung liegt daher die Aufgabe zugrunde, einen gattungsgemäßen Körper zu schaffen, bei dem auf besonders einfache und kostengünstige Weise ein Ausdrehen oder Lockern der Schraubverbindung verhindert werden kann.

Erfindungsgemäß wird diese Aufgabe dadurch gelöst, daß das Kunststoffteil eine Ausnehmung aufweist, die mit einem in der Verlängerung der Spitze des Schraubgewindes vorgesehenen Ansatz in Eingriff steht.

Dadurch, daß in Teilbereichen des Schraubgewindes ein unmittelbarer Kontakt des erfindungsgemäßen Kunststoffteils mit dem entsprechenden Innenschraubgewinde besteht, findet in diesem Bereich eine Verquetschung des Kunststoffmaterials beim Eindrehen der Schraube statt und wird ein Reibschluß bewirkt. Durch die Ausnehmung im Kunststoffteil wird erreicht, daß das Kunststoffteil in überraschend einfacher und seine zuverlässige Funktion gewährleistender Weise auf die Spitze des Schraubgewindes aufgeschoben werden kann.

Es ist dabei besonders bevorzugt, wenn sowohl der Ansatz als auch die Ausnehmung im Kunststoffteil zylinderförmig ausgebildet und mittig bezüglich des Querschnitts des Schraubgewindes bzw. des Kunststoffteils angeordnet ist.

Die Erfindung schlägt weiterhin vor, daß das Kunststoffteil sich zu seiner Spitze hin konisch verjüngend ausgebildet ist, wobei es besonders bevorzugt ist, wenn das Schraubgewinde zumindest in einem Teilbereich über das Kunststoffteil übersteht. Auf diese Weise kann der erfindungsgemäße Körper problemlos eingeschraubt werden, da seine Gewindegänge weitgehend unbehindert in die Gewindegänge des komplementären Innenschraubgewindes eingreifen können. Ein Reibschluß kommt erst in dem Moment zustande, wo die Spitze des Kunststoffteils gegen ein entsprechendes inneres Ende des Innenschraubgewindes stößt und die Seiten des Kunststoffteils dadurch nach außen gedrückt wird.

Besonders bevorzugt ist die Verwendung des erfindungsgemäßen Körpers in der Zahnprothetik als Implantatextension, Implantatpfosten, Pfosten für Attachments, Schraube zur Befestigung von Kronen, Stegen und anderen Aufbauten oder dergleichen.

Weitere Merkmale und Vorteile der Erfindung ergeben sich aus der nachfolgenden Beschreibung, in der (selbstverständlich ohne Beschränkung auf dieses Anwendungsgebiet) Ausführungsbeispiele anhand der Zeichnungen im einzelnen erläutert sind. Dabei zeigt:
- Fig. 1: ein Ausführungsbeispiel für eine Schraube für die Befestigung von Kronen, Stegen und anderen Aufbauten in Seitenansicht:
- Fig. 2: das Ausführungsbeispiel von Fig. 1 in um 90° gedrehter, teilweise geschnittener Ansicht;
- Fig. 3: das Ausführungsbeispiel von Fig. 1 in Draufsicht auf die Spitze der Schraube ohne Kunststoffteil;
- Fig. 4: das Kunststoffteil für die erfindungsgemäße Verdrehsicherung in Seitenansicht;
- Fig. 5: das Kunststoffteil von Fig. 4 in Draufsicht von der Schraubenseite her;
- Fig. 6: ein Ausführungsbeispiel einer mit erfindungsgemäßer Verdrehsicherung versehenen Implantatextension zur Verwendung bei einem enossalen Zahnimplantat in Seitenansicht;
- Fig. 7: das Ausführungsbeispiel von Fig. 6 in Schnittdarstellung;
- Fig. 8: das in Fig. 6 und 7 dargestellte Kunststoffteil zur Verdrehsicherung in teilweiser Schnittdarstellung; und
- Fig. 9: das Kunststoffteil von Fig. 7 in Draufsicht vom Extensionsteil her.

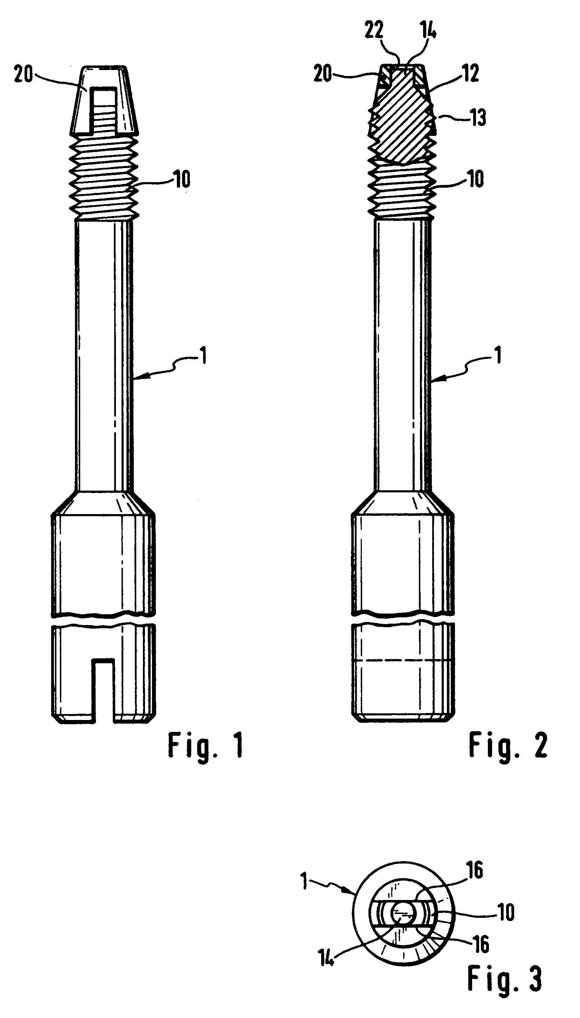

Fig. 1 und Fig. 2 zeigen, beispielhaft für die Erfindung, eine mit der erfindungsgemäßen Verdrehsicherung versehenen Schraube 1 aus Metall zur Befestigung von Kronen, Stegen und anderen Aufbauten. Dabei dient der obere Teil der Schraube 1 mit dem Schraubgewinde 10 zum Einschrauben in das Innengewinde eines Extensionsteil oder in ein anderes Innengewinde, wahrend der in der Zeichnung unten dargestellte Teil der Schraube (Schraubenkopf) die Halterung des Zahnersatzes übernimmt. Eine derartige Schraube 1 kann dabei entweder direkt oder (über ein in den Grundkörper einschraubbares Zwischenstück oder eine entsprechende Extension) indirekt mit einem implantierten Grundkörper verbunden werden.

In Fig. 2 ist zu erkennen, daß das Kunststoffteil 20 sich zu seiner Spitze hin konisch verjüngend ausgebildet und mit einem Ansatz 14 versehen ist, der mit einer entsprechenden Ausnehmung 22 im Kunststoffteil 20 in Eingriff steht. Im dargestellten Fall - siehe Fig. 3 - ist sowohl der Ansatz 14 als auch die Ausnehmung 22 im Kunststoffteil 20 zylinderförmig ausgebildet und mittig bezüglich der Querschnitts des Schraubgewindes 10 bzw. des Kunststoffteils 20 angeordnet. Wie ebenfalls in Fig. 3 erkennbar, sind im Endabschnitt 13 des Schraubgewindes nur zwei relativ schmale Bereiche des Schraubgewindes stehengeblieben, während die beiden größeren Bereiche 16 von seitlichen Zungen 26 des Kunststoffteils 20 ausgefüllt werden. Durch die konische Ausbildung des Kunststoffteils 20 steht das Schraubgewinde 10 - wie in Fig. 2 zu sehen - zumindest teilweise über das Kunststoffteil 20 über, was die oben angegebenen Vorteile beim Einschrauben des erfindungsgemäßen Körpers mit sich bringt.

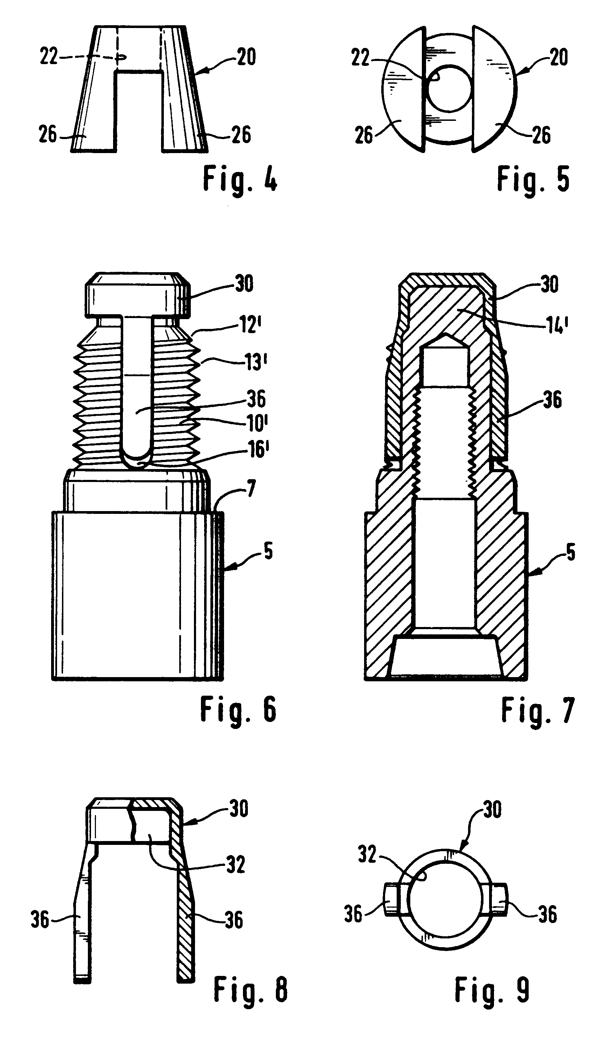

Die genauere Ausgestaltung für eine beispielhafte Ausführungsform des Kunststoffteils 20 ergibt sich aus den Fig. 4 und 5, wobei hier deutlich die seitlichen, einen Teil des Schraubgewindes 10 in dessen Teil 13 ersetzende Zungen 26, die zum Eingriff mit dem Ansatz 14 der Schraube 1 vorgesehene zylinderförmige Ausnehmung 22 und die konische Verjüngung des Kunststoffteils 20 zur Spitze hin zu erkennen sind.

Wie aus Fig. 6 und 7 erkennbar, kann der erfindungsgemäß angestrebte Reibschluß im Bereich des Schraubgewindes (in Fig. 6 zeichnerisch nicht dargestellt) aber auch in konstruktiv unterschiedlicher Weise erreicht werden. In der Zeichnung ist beispielhaft ein mit einer Schulter 7 an den oberen Rand eines implantierbaren Grundkörpers anlegbare, in diesen einschraubbare Extension 5 aus Metall, ebenfalls zur Verwendung mit einem enossalen Zahnimplantat, dargestellt, wie sie beispielsweise als Zwischenelement - wie oben erwähnt - für eine entsprechende Schraube 1 dienen kann. Auch hier ist an der Spitze 12' des Schraubgewindes 10' ein Ansatz 14' erkennbar, auf den ein entsprechendes Kunststoffteil 30 aufgeschoben wird. Dieses Kunststoffteil 30 weist in der dargestellten Ausführungsform der Erfindung ebenfalls in Längsrichtung des Schraubgewindes 10' verlaufende, seitliche Ausnehmungen 16' auf, die mit komplementären Zungen 36 des Kunststoffteils 30 in Eingriff stehen. Auf diese Weise wird wiederum ein Teil des Schraubgewindes 10' durch Kunststoffmaterial ersetzt.

Dabei sind die Zungen 36 des Kunststoffteils 30 in diesem Fall schmaler, dafür aber länger ausgebildet als beim Ausführungsbeispiel nach Fig. 1 und 2. Beim Einschrauben führt die Verquetschung des Kunststoffmaterials wieder zu dem angestrebten Reibschluß. Dies wird entweder dadurch erreicht, daß durch Druck auf das distale Ende des Kunststoffteils 30 beim Einschrauben eine Ausbauchung der Zungen 36 erfolgt, oder dadurch, daß die Zungen geringfügig über die Grate des Schraubgewindes 10' überstehen und so den entsprechenden Reibschluß bewirken.

Die Fig. 8 und 9 zeigen schließlich in ähnlicher Weise wie Fig. 4 und 5 Detaildarstellungen des Kunststoffteils 30 von Fig. 6 und 7 in teilweise geschnittener Seitenansicht bzw. in Draufsicht. Dabei sind die seitlichen Zungen 36 sowie die auch hier mittig angeordnete Ausnehmung 32 zum Eingriff mit dem Ansatz 14' der Extension 5 gut erkennbar.

Natürlich ist es daneben noch denkbar (wenn auch zeichnerisch nicht dargestellt), in einfachster Ausführung der Erfindung ein Kunststoffteil mit ein- oder mehrteiligen seitlichen Lamellen über das vorhandene, nicht mit Ausnehmungen versehene Schraubgewinde zu stülpen, um den angestrebten Effekt zu erzielen. Eleganter und dauerhafter (wegen geringerem Verschleiß des Kunststoffteils) sind jedoch die oben detailliert dargestellten Lösungen.

Die in der vorstehenden Beschreibung, in der Zeichnung sowie in den Ansprüchen offenbarten Merkmale der Erfindung können sowohl einzeln als auch in beliebiger Kombination für die Verwirklichung der Erfindung in ihren verschiedenen Ausführungsformen wesentlich sein.

## Patentansprüche

1. Mit Außenschraubgewinde versehener Körper, mit mindestens einem zumindest im Endabschnitt (13, 13') des Schraubgewindes (10, 10') diesen zumindest teilweise überdeckenden und/oder diesen zumindest teilweise ersetzenden Kunststoffteil (20, 30), dadurch gekennzeichnet, daß das Kunststoffteil eine Ausnehmung (22, 32) aufweist, die mit einen in der Verlängerung der Spitze (12, 12') des Schraubgewindes (10, 10') vorgesehenen Ansatz (14, 14') in Eingriff steht.

2. Körper nach Anspruch 1, dadurch gekennzeichnet, daß sowohl der Ansatz (14, 14') als auch die Ausnehmung (22, 32') zylinderförmig ausgebildet und mittig bezüglich des Querschnitts des Schraubengewindes (10, 10') bzw. des Kunststoffteils (20, 30) angeordnet ist.

3. Körper nach einem der vorangehenden Ansprüche, dadurch gekennzeichnet, daß das Kunststoffteil (20, 30') sich zu seiner Spitze hin konisch verjüngend ausgebildet ist.

4. Körper nach Anspruch 3, dadurch gekennzeichnet, daß das Schraubgewinde (10, 10') zumindest in einem Teilbereich über das Kunststoffeil (20, 309) übersteht.

5. Verwendung eines Körpers nach einem der vorangehenden Ansprüche in der Zahnprothetik als Implantatextension, Implantatpfosten, Pfosten für Attachements, Schraube zur Befestigung von Kronen, Stegen und anderen Aufbauten oder dergleichen.

## Claims

1. A body which is provided with an external screw thread and has at least one plastic part (20, 30) which, at least in the end portion (13, 13') of the screw thread (10, 10'), at least partly overlaps this portion and/or at least partly replaces it, characterised in that the plastic part comprises a recess (22, 32) which is in engagement with a lug (14, 14') provided in the extension of the tip (12, 12') of the screw thread (10, 10').

2. A body according to claim 1, characterised in that both the lug (14, 14') and the recess (22, 32') are cylindrical and disposed centrally with respect to the cross section of the screw thread (10, 10') or of the plastic part (20, 30).

3. A body according to one of the preceding claims, characterised in that the plastic part (20, 30') tapers towards its tip.

4. A body according to claim 3, characterised in that the screw thread (10, 10') projects beyond the plastic part (20, 30), at least in a sub-area.

5. Use of a body according to one of the preceding claims in dental prosthetics as an implant extension, an implant post, a post for attachments, a screw for securing crowns, bridges and other superstructures or similar.

## Revendications

1. Corps pourvu d'un filetage de vis extérieur, comportant au moins une pièce de matière plastique (20, 30), qui, au moins dans le tronçon terminal (13, 13') du filetage de vis (10, 10'), recouvre au moins partiellement ce tronçon terminal et/ou le remplace au moins partiellement, caractérisé en ce que la pièce de matière plastique présente un évidement (22, 32) qui est en prise avec un tenon (14, 14') prévu dans le prolongement de la pointe (12, 12') du filetage de vis (10, 10').

2. Corps selon la revendication 1, caractérisé en ce qu'aussi bien le tenon (14, 14') que l'évidement (22, 32) sont de configuration cylindrique et sont disposés de manière centrale par rapport à la section transversale du filetage de vis (10, 10') et de la pièce de matière plastique (20, 30).

3. Corps selon l'une des revendications précédentes, caractérisé en ce que la pièce de matière plastique (20, 30) est réalisée de façon à se rétrécir de manière conique en direction de sa pointe.

4. Corps selon la revendication 3, caractérisé en ce que le filetage de vis (10, 10'), au moins dans une zone partielle, fait saillie de la pièce de matière plastique (20, 30).

5. Utilisation du corps selon l'une des revendications précédentes dans le domaine des prothèses dentaires, en tant qu'extension d'implant, de pivot d'implant, de pivot pour attachements, de vis pour la fixation de couronnes, d'entretoises et d'autres éléments rapportés ou similaires.
